# EUROPEAN PATENT APPLICATION

(11) **EP 4 636 603 A1**
(43) Date of publication of application: **22.10.2025**
(21) Application number: 24744157.9
(22) Date of filing: 11.01.2024
(51) Int. Cl.: G06F 12/14

(54) **INTEGRATED CIRCUIT AND PROCESSING METHOD FOR MEMORY ACCESS, ELECTRONIC DEVICE, AND MEDIUM**

(30) Priority: 17.01.2023 CN 202310079654
(71) Applicant: Horizon Journey (Shanghai) Technology Co., Ltd., Shanghai 201306 (CN)
(72) Inventor: SHEN, Juncheng, Shanghai 201306 (CN); LI, Shixian, Shanghai 201306 (CN); ZHANG, Jie, Shanghai 201306 (CN); LI, Jianjun, Shanghai 201306 (CN); YU, Hongmin, Shanghai 201306 (CN)
(74) Representative: V.O.
(86) International application number: PCT/CN2024/071811
(87) International publication number: WO 2024/152981

(57) **Abstract**

Embodiments of this disclosure disclose an integrated circuit for memory access, a processing method, an electronic device, and a medium. The IC includes: a first bit width converting module, configured for: converting a first write access signal of a processor into a second write access signal including two copies of the original to-be-written data; a first memory controlling module, configured for: converting target to-be-written data in the second write access signal into at least one group of first to-be-written data meeting a first protocol supported by a memory physical layer interface, and determining at least one group of third write access signals corresponding respectively to the at least one group of first to-be-written data, wherein the at least one group of first to-be-written data respectively includes two copies of identical first to-be-written data coming respectively from the two copies of the original to-be-written data; and the memory physical layer interface, configured for: converting the at least one group of third write access signals respectively into two fourth write access signals meeting a memory protocol, and transmitting the fourth write access signals respectively to a respective memory module. With embodiments of this disclosure, it is enabled to effectively meet a storage need of a function needing a high safety level based on a memory of a low safety level.

## Description

### RELATED APPLICATION INFORMATION

This disclosure claims priority to Chinese patent application No. CN202310079654.7, filed with the China National Intellectual Property Administration on January 17, 2023 and entitled "INTEGRATED CIRCUIT FOR MEMORY ACCESS, PROCESSING METHOD, ELECTRONIC DEVICE, AND MEDIUM", which is incorporated herein by reference in its entirety.

### FIELD OF THE INVENTION

This disclosure relates to a semiconductor technology, and in particular, to an integrated circuit (IC) for memory access, a processing method, an electronic device, and a medium.

### BACKGROUND OF THE INVENTION

In field of intelligent driving, a DDR (Double Data Rate SDRAM (Synchronous Dynamic Random Access Memory)) of an intelligent driving chip is configured mainly for supporting storage related to perception and prediction function for intelligent driving. The function currently needs a functional safety level of an automotive safety integrity level B (ASILB). However, with evolution of an algorithm for a control and decision making function of intelligent driving functions which needs a safety level of an automotive safety integrity level D (ASILD), the algorithm for the control and decision making function needs increasingly great computing power and storage, and if a control and decision making algorithm is developed using a processor (or a core internal to a processor) and a random access memory (RAM), storage shortage tends to occur, thereby leading to insufficient storage of a high safety level corresponding to a function needing the high safety level.

### SUMMARY OF THE INVENTION

Embodiments of this disclosure provide an integrated circuit (IC) for memory access, a processing method, an electronic device, and a medium, to meet a storage need of the function needing the high safety level.

Based on an aspect of embodiments of this disclosure, an integrated circuit for memory access is provided, and includes: a first bit width converting module, configured for: converting, according to a first preset converting mode, original to-be-written data in a first write access signal of a processor into target to-be-written data including two copies of the original to-be-written data, and determining, based on the target to-be-written data, a second write access signal obtained by conversion; a first memory controlling module, connected to the first bit width converting module, and configured for: converting the target to-be-written data in the second write access signal into at least one group of first to-be-written data meeting a first protocol supported by a memory physical layer interface, and determining based on the at least one group of first to-be-written data, at least one group of third write access signals corresponding respectively to the at least one group of first to-be-written data, wherein the at least one group of first to-be-written data respectively includes two copies of identical first to-be-written data coming respectively from the two copies of the original to-be-written data, and the at least one group of third write access signals respectively includes two third write access signals; and the memory physical layer interface, connected to the first memory controlling module, and configured for: converting the at least one group of third write access signals respectively into two fourth write access signals meeting a memory protocol, and transmitting the fourth write access signals respectively to a respective memory module.

Based on another aspect of embodiments of this disclosure, a processing method for memory access is provided, and includes: converting, according to a first preset converting mode, original to-be-written data in a first write access signal of a processor into target to-be-written data including two copies of the original to-be-written data, and determining, based on the target to-be-written data, a second write access signal obtained by conversion; converting the target to-be-written data in the second write access signal into at least one group of first to-be-written data meeting a first protocol supported by a memory physical layer interface, and determining, based on the at least one group of first to-be-written data, at least one group of third write access signals corresponding respectively to the at least one group of first to-be-written data, wherein the at least one group of first to-be-written data respectively includes two copies of identical first to-be-written data coming respectively from the two copies of the original to-be-written data, and the at least one group of third write access signals respectively includes two third write access signals; and converting the at least one group of third write access signals respectively into two fourth write access signals meeting a memory protocol, and transmitting the fourth write access signals respectively to a respective memory module.

Based on yet another aspect of embodiments of this disclosure, a computer readable storage medium is provided. The storage medium stores thereon a computer program. The computer program is configured for implementing the method according to any one of embodiments of this disclosure. Or, the storage medium is configured for storing data to be stored for at least one hardware logic circuit of the IC according to any one of embodiments of this disclosure, which enables the at least one hardware logic circuit to implement a corresponding function in operation.

Based on still another aspect of embodiments of this disclosure, an electronic device, the electronic device is provided, and includes: a processor; and a memory configured to store processor-executable instructions. The processor is configured to read the executable instructions from the memory, and execute the instructions to implement the method according to any one of embodiments of this disclosure. Or, the electronic device includes the IC according to any one of embodiments of this disclosure, wherein at least one module in the IC is implemented using a hardware logic circuit.

Based on an integrated circuit (IC) for memory access, a processing method, an electronic device, and a medium according to embodiments of this disclosure, the original to-be-written data are converted into the target to-be-written data including the two copies of the original to-be-written data by performing bit width conversion on the first write access signal of the processor, then the second write access signal obtained by conversion may be determined based on the target to-be-written data, and the two copies of the original to-be-written data are written in the two memory modules through the first memory controlling module and the memory physical layer interface, such that in reading the data, identical data may be read from the two memory modules, guaranteeing functional safety of a function needing a high safety level through consistency of results of access of the two memory modules, which enables a memory controller to also access a function needing a high safety level while meeting just a low safety level, which thereby enables to use a memory of the low safety level for the function needing the high safety level, such that the function needing the high safety level may access the memory of the low safety level, which helps provide greater storage support for the function needing the high safety level while meeting functional safety, which thereby enables to effectively meet a storage need of the function needing the high safety level, to solve problems such as insufficient storage of a high safety level.

A technical solution of this disclosure further is elaborated below using accompanying drawings and embodiments.

### BRIEF DESCRIPTION OF THE DRAWINGS

FIG. 1 is an illustrative scene of application of an integrated circuit for memory access according to this disclosure.
FIG. 2 is a diagram of a structure of an integrated circuit for memory access according to an illustrative embodiment of this disclosure.
FIG. 3 is a diagram of a structure of an integrated circuit for memory access according to another illustrative embodiment of this disclosure.
FIG. 4 is a diagram of a structure of a read data verification module 27 according to an illustrative embodiment of this disclosure.
FIG. 5 is a diagram of a structure of an integrated circuit for memory access according to yet another illustrative embodiment of this disclosure.
FIG. 6 is a diagram of a structure of a memory physical layer interface 23 according to an illustrative embodiment of this disclosure.
FIG. 7 is a diagram of a structure of a memory physical layer interface 23 according to another illustrative embodiment of this disclosure.
FIG. 8 is a schematic diagram of a principle of converting original to-be-written data into target to-be-written data according to an illustrative embodiment of this disclosure.
FIG. 9 is a diagram of a structure of an integrated circuit for memory access according to still another illustrative embodiment of this disclosure.
FIG. 10 is a diagram of a structure of an integrated circuit for memory access according to yet another illustrative embodiment of this disclosure.
FIG. 11 is a schematic diagram of a principle of converting third data into fourth data according to an illustrative embodiment of this disclosure.
FIG. 12 is a flowchart of a processing method for memory access according to an illustrative embodiment of this disclosure.
FIG. 13 is a flowchart of a processing method for memory access according to another illustrative embodiment of this disclosure.
FIG. 14 is a flowchart of reading data in memory access according to an illustrative embodiment of this disclosure.
FIG. 15 is a flowchart of a processing method for memory access according to yet another illustrative embodiment of this disclosure.
FIG. 16 is a schematic diagram of a structure of another application embodiment of an electronic device according to this disclosure.

### DETAILED DESCRIPTION OF THE EMBODIMENTS

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.

It should be noted that unless otherwise specified, the scope of this disclosure is not limited to relative arrangements, numeric expressions, and numerical values of components and steps described in these embodiments.

### Disclosure overview

In implementing this disclosure, the inventor discovers that in field of intelligent driving, a DDR (double data rate SDRAM (synchronous dynamic random access memory)) of an intelligent driving chip is configured mainly for supporting storage related to perception and prediction function for intelligent driving. The function currently needs a functional safety level of an automotive safety integrity level B (ASILB). However, with evolution of an algorithm for a control and decision making function of intelligent driving functions which needs a safety level of an automotive safety integrity level D (ASILD), the algorithm for the control and decision making function needs increasingly great computing power and storage, and if a control and decision making algorithm is developed using a processor (or a core internal to a processor) and a random access memory (RAM), storage shortage tends to occur, thereby leading to insufficient storage of a high safety level corresponding to a function needing the high safety level.

### Illustrative overview

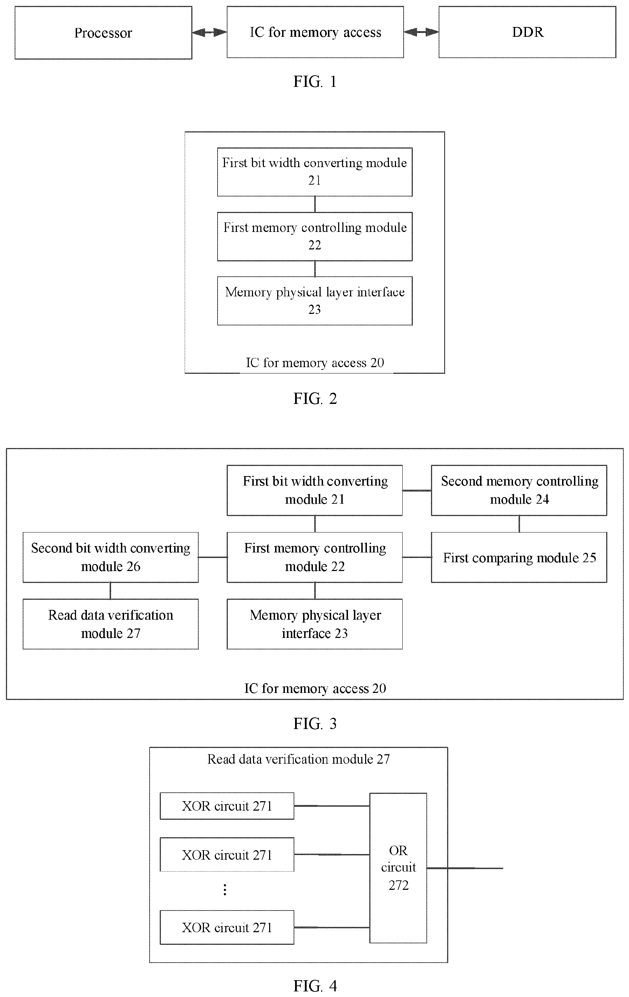

FIG. 1 is an illustrative scene of application of an integrated circuit (IC) for memory access according to this disclosure.

In a functional scene of a preset level (ASILD) such as control and decision making, etc., for intelligent driving, using the IC for memory access according to this disclosure, a processor in charge of implementing a respective algorithm for the control and decision making function may access the DDR under a condition that the functional safety level ASILD of the functional scene is met, thereby providing, based on the DDR, more powerful storage capability for the functional scene, to meet the functional scene's increasingly great need for storage. The processor may be any possible processor or processor core within the intelligent driving chip, such as a central processing unit (CPU), a graphics processing unit (GPU), a brain processing unit (BPU), an artificial intelligence (AI) processor (neural processing unit, NPU), a deep learning processing unit (DPU) etc., specifics of which are not limited. Specifically, the IC for memory access according to this disclosure may include a first bit width converting module, a first memory controlling module, and a memory physical layer interface. The first bit width converting module may be configured for: converting, according to a first preset converting mode, original to-be-written data in a first write access signal of a processor into target to-be-written data including two copies of the original to-be-written data, and determining, based on the target to-be-written data, a second write access signal obtained by conversion. The first memory controlling module may be connected to the first bit width converting module, and the first memory controlling module may be configured for: converting the target to-be-written data in the second write access signal into at least one group of first to-be-written data meeting a first protocol supported by the memory physical layer interface, and determining, based on the at least one group of first to-be-written data, at least one group of third write access signals corresponding respectively to the at least one group of first to-be-written data, wherein the at least one group of first to-be-written data may respectively include two copies of identical first to-be-written data coming respectively from the two copies of the original to-be-written data, and the at least one group of third write access signals may respectively include two third write access signals. The memory physical layer interface may be connected to the first memory controlling module, and the memory physical layer interface may be configured for: converting the at least one group of third write access signals respectively into two fourth write access signals meeting a memory protocol, and transmitting the fourth write access signals respectively to a respective memory module. Thereby for memory access, two memory modules may be accessed at the same time, and high-level memory access safety may be implemented through consistency of results of access of the two memory modules, which thereby enables to provide storage capability for a functional scene of a high level (such as ASILD) based on a memory device of a low level (such as ASILB) having great storage capability, which helps solve problems such as insufficient storage for a functional scene of a high level.

Note that in addition to being applicable to a scene of control and decision making for intelligent driving as described above, the IC according to this disclosure further may be applied to any scene needing a high safety level as needed, specifics of which are not limited.

### Illustrative apparatus

FIG. 2 is a diagram of a structure of an integrated circuit for memory access accord ing to an illustrative embodiment of this disclosure. This embodiment may apply to an electronic device, specifically to an onboard computing platform, for example. As shown in FIG. 2, the integrated circuit 20 for memory access (IC for short) may include: a first bit width converting module 21, a first memory controlling module 22, and a memory physical layer interface 23.

The first bit width converting module 21 may be configured for: converting, according to a first preset converting mode, original to-be-written data in a first write access signal of a processor into target to-be-written data including two copies of the original to-be-written data, and determining, based on the target to-be-written data, a second write access signal obtained by conversion.

The first memory controlling module 22 may be connected to the first bit width converting module 21, and the first memory controlling module 22 may be configured for: converting the target to-be-written data in the second write access signal into at least one group of first to-be-written data meeting a first protocol supported by the memory physical layer interface, and determining, based on the at least one group of first to-be-written data, at least one group of third write access signals corresponding respectively to the at least one group of first to-be-written data, wherein the at least one group of first to-be-written data respectively includes two copies of identical first to-be-written data coming respectively from the two copies of the original to-be-written data, and the at least one group of third write access signals respectively includes two third write access signals.

The memory physical layer interface 23 may be connected to the first memory controlling module 22, and the memory physical layer interface 23 may be configured for: converting the at least one group of third write access signals respectively into two fourth write access signals meeting a memory protocol, and transmitting the fourth write access signals respectively to a respective memory module.

The processor may be any possible processor or processor core within the intelligent driving chip, such as a central processing unit (CPU), a graphics processing unit (GPU), an AI processor (also referred to as AI processor core), etc., specifics of which are not limited. The first write access signal may include a data signal (including the original to-be-written data), a control signal, and an address signal. The first preset converting mode may be set as needed. The first preset converting mode may be configured for producing two copies of the original to-be-written data, constituting the target to-be-written data using the two copies of the original to-be-written data according to a preset format, and setting the target to-be-written data to be a data signal in the second write access signal.

The first memory controlling module 22 may be a controlling module connecting the first bit width converting module 21 and the memory physical layer interface 23, and the first memory controlling module 22 may be configured for converting the second write access signal obtained by the first bit width converting module 21 by conversion into a write access signal meeting the protocol supported by the memory physical layer interface. To write the two copies of the original to-be-written data respectively in two memory modules, in protocol conversion, the first memory controlling module 22 may convert the target to-be-written data including the two copies of the original to-be-written data into the at least one group of first to-be-written data, wherein the at least one group of first to-be-written data may respectively include the two copies of identical first to-be-written data, wherein the two copies included in the respective at least one group of first to-be-written data may come respectively from the two copies of the original to-be-written data in the target to-be-written data. For example, the original to-be-written data may be 128-bit, and first to-be-written data may be 16-bit, then 8 groups of first to-be-written data may be obtained by conversion, where two copies of first to-be-written data of a 1-st group both may include a 0-th bit to a 15-th bit of the original to-be-written data, two copies of first to-be-written data of a 2-nd group both may include a 16-th bit to a 31-stbit of the original to-be-written data, ..., and two copies of first to-be-written data of an 8-th group both may include a 112-th bit to a 127-th bit of the original to-be-written data. A copy of first to-be-written data may be set to be a data signal in a third write access signal. Therefore, at least one group of third write access signals may be obtained by conversion, where the at least one group of third write access signals may respectively include two third write access signals.

In actual application, specific bit widths of the original to-be-written data and first to-be-written data may be set as needed.

The memory physical layer interface 23 may be a bridge connecting the first memory controlling module 22 and a memory, and the memory physical layer interface 23 may be configured for converting a group of two third write access signals obtained by the first memory controlling module 22 by conversion into two fourth write access signals meeting the memory protocol, and transmitting the two fourth write access signals respectively to respective memory modules, such as transmitting one fourth write access signal to a first memory module, and transmitting the other fourth write access signal to a second memory module. Thereby the two copies of the original to-be-written data are written in the two memory modules in multiple groups.

In an optional embodiment, in addition to including conversion of to-be-written data, various write access signal converting processes may further include transforming the control signal. For example, in converting the first write access signal into the second write access signal, in addition to converting the original to-be-written data into the target to-be-written data, a signal in the control signal indicating a data length further may be converted. As another example, in converting the second write access signal into the at least one group of third write access signals, in addition to converting the target to-be-written data into first to-be-written data, the first memory controlling module further may transform the data length, specifics of which may be set as needed.

In an optional embodiment, conversion performed by the modules also may be represented as conversion of an access signal, wherein conversion of a data part may be performed according to the foregoing converting mode. For example, the first bit width converting module 21 may be configured for converting the first write access signal into the second write access signal, wherein the target to-be-written data in the second write access signal may be obtained by converting the original to-be-written data in the first write access signal according to the first preset converting mode, wherein the target to-be-written data may include two copies of the original to-be-written data. The process of converting the first write access signal into the second write access signal further may include converting the control signal, specifics of which may be set as needed.

In an optional embodiment, the first memory controlling module 22 may be a DDR controller.

In an optional embodiment, the memory physical layer interface 23 may be a DDR PHY (DDR physical interface, a DDR physical layer interface). Accordingly, the first protocol may be a DFI (the DDR PHY interface) protocol, and the memory protocol may be a DDR protocol. The DDR PHY may include two independent transmit channels. The two transmit channels of the DDR PHY may be configured for transmitting a group of two fourth write access signals.

In an optional embodiment, specific structures of the first bit width converting module 21, the first memory controlling module 22, and the memory physical layer interface 23 may be set as needed.

In an optional embodiment, the fourth write access signals respectively may correspond to one memory module. The at least one group of two third write access signals respectively may be converted into two fourth write access signals, which therefore may correspond to two memory modules, which may respectively be referred to as the first memory module and the second memory module. The two memory modules may be any two memory devices connected within the intelligent driving chip, or two memory regions in one memory device, such as two storage regions of the same address in the DDR within the intelligent driving chip, specifics of which may be set as needed.

Optionally, the IC according to embodiments of this disclosure may be connected to the processor through any bus that can be implemented, such as an advanced extensible interface (AXI), an advanced high performance bus (AHB), an advanced peripheral bus (APB), a coherent hub interface (CHI), etc., which thereby enables the processor to access the first memory module and the second memory module through the bus.

With the IC for memory access according to this embodiment, the original to-be-written data are converted into the target to-be-written data including the two copies of the original to-be-written data by performing bit width conversion on the first write access signal of the processor, then the second write access signal obtained by conversion may be determined based on the target to-be-written data, and the two copies of the original to-be-written data are written in the two memory modules through the first memory controlling module and the memory physical layer interface, such that in reading the data, identical data may be read from the two memory modules, guaranteeing functional safety of a function needing a high safety level through consistency of results of access of the two memory modules, which enables a memory controller to also access a function needing a high safety level while meeting a low safety level, which thereby enables to use a memory of the low safety level for the function needing the high safety level, such that the function needing the high safety level may access the memory of the low safety level, providing greater storage support for the function needing the high safety level while meeting functional safety, which thereby enables to effectively meet a storage need of the function needing the high safety level, to solve problems such as insufficient storage of a high safety level.

FIG. 3 is a diagram of a structure of an integrated circuit (IC) for memory access according to another illustrative embodiment of this disclosure.

In an optional embodiment, the IC according to embodiments of this disclosure further may include: a second memory controlling module 24 and a first comparing module 25.

The second memory controlling module 24 may be connected to the first bit width converting module 21, and the second memory controlling module 24 may be configured for: converting the target to-be-written data in the second write access signal into at least one group of second to-be-written data meeting the first protocol supported by the memory physical layer interface 23, and determining, based on the at least one group of second to-be-written data, at least one group of fifth write access signals corresponding respectively to the at least one group of second to-be-written data, where the at least one group of second to-be-written data respectively includes two copies of identical second to-be-written data coming respectively from the two copies of the original to-be-written data, and the at least one group of fifth write access signals respectively includes two fifth write access signals.

The first comparing module 25 may be connected respectively to the first memory controlling module 22 and the second memory controlling module 24, and the first comparing module 25 may be configured for: comparing the at least one group of third write access signals respectively to the at least one group of fifth write access signals, and in response to a result of comparison being inconsistent, outputting an error signal.

A specific principle with which the second memory controlling module 24 performs conversion may be consistent with that with which the first memory controlling module 22 performs conversion, with a difference lying in that the at least one group of fifth write access signals obtained by the second memory controlling module 24 does not have to be transmitted to the memory physical layer interface 23, but may be transmitted to the first comparing module 25, and the at least one group of third write access signals obtained by the first memory controlling module 22 also may be transmitted to the first comparing module 25. The first comparing module 25 may be configured for comparing the at least one group of third write access signals respectively to the at least one group of fifth write access signals, to determine whether a processing result of the first memory controlling module 22 is consistent with a processing result of the second memory controlling module 24, and outputting an error signal when a result of comparison indicates inconsistency, to take a respective measure in time, thereby improving functional safety of the first memory controlling module 22, avoiding a danger due to an error occurring to the first memory controlling module 22 from happening.

In an optional embodiment, in addition to comparing the at least one group of third write access signals respectively to the at least one group of fifth write access signals, the first comparing module 25 further may compare other output signals of the first memory controlling module 22 and the second memory controlling module 24 in operation, implementing mutual verification of any functions of the first memory controlling module 22 and the second memory controlling module 24, to further improve functional safety of the first memory controlling module 22.

With this embodiment, a second memory controlling module identical to the first memory controlling module function-wise is set, for verifying the processing result of the first memory controlling module, which enables to effectively improve correctness and effectiveness of the processing result of the first memory controlling module, thereby improving data writing safety, which enables to discover an error in time as it occurs to the first memory controlling module, such that a write access to the memory is enabled to meet a high safety level.

In an optional embodiment, the IC according to embodiments of this disclosure further may include: a second bit width converting module 26 and a read data verification module 27.

The memory physical layer interface 23 further may be configured for: obtaining, respectively from a first memory module and a second memory module, at least one group of first data, converting the at least one group of first data into at least one group of second data meeting the first protocol, and transmitting the at least one group of second data to the first memory controlling module 22, where the at least one group of first data may respectively include first read data and second read data, and the at least one group of second data may respectively include third read data corresponding to the first read data and fourth read data corresponding to the second read data.

The first memory controlling module 22 further may be configured for: converting the at least one group of second data into third data meeting a second protocol supported by the second bit width converting module 26, and transmitting the third data to the second bit width converting module 26.

The second bit width converting module 26 may be configured for: performing bit width conversion on the third data according to a second preset converting mode, to obtain fourth data and fifth data, and transmitting the fourth data to the processor.

The read data verification module 27 may be configured for: comparing the fourth data and the fifth data, and in response to the result of comparison being inconsistent, outputting the error signal.

The second preset converting mode may be an inverse mode of the first preset converting mode. After identical data have been written in the first memory module and the second memory module, to read these data, likewise, a group (including two copies) of identical data written in parallel may be read in parallel from the first memory module and the second memory module. For distinction, the data read from the first memory module may be referred to as first read data, the data read from the second memory module may be referred to as second read data, and the first read data and the second read data may be set to be a group of first data. The memory physical layer interface 23 may: convert the first read data and the second read data in a group of first data into third read data and fourth read data meeting the first protocol, set the third read data and the fourth read data to be a group of second data, and transmit at least one group of second data to the first memory controlling module 22. For example, the memory physical layer interface may transmit the third read data and the fourth read data in parallel respectively through two independent channels to the first memory controlling module 22. The first memory controlling module 22 then may be configured for: converting the at least one group of second data into the third data meeting the second protocol supported by the second bit width converting module 26. This converting process is inverse to the process of converting the target to-be-written data into the first to-be-written data, and enables to combine the at least one group of second data into the third data according to a certain format. The second bit width converting module 26 may perform bit width conversion on the third data according to a second preset converting mode, to obtain the fourth data and the fifth data. If no error occurs to data reading, the fourth data and the fifth data should be identical data. The second bit width converting module 26 may transmit the obtained fourth data or fifth data to the processor, and transmit the obtained fourth data and fifth data to the read data verification module 27 for verification. The read data verification module 27 may compare the fourth data and the fifth data, and output the error signal if the result of comparison indicates inconsistency. As the read data are previously written data, the fourth data and the fifth data in the data reading process are consistent with the two copies of the original to-be-written data in the data writing process in terms of bit width, the third data in the data reading process are consistent with the target to-be-written data in the data writing process in terms of bit width, the first read data and the second read data in the data reading process are consistent with to-be-written data in the fourth write access signal in the data writing process in terms of bit width, and the third read data and the fourth read data in the data reading process are consistent with the first to-be-written data in the data writing process in terms of bit width.

In an optional embodiment, a mode of indicating the error signal may be set as needed, where for example an output 1 indicates that an error occurs, specifics of which are not limited.

In an optional example, the memory physical layer interface 23 once may convert a group of 16-bit first data (including first read data and second read data) read from the first memory module and the second memory module into a group of 16-bit second data (third read data and fourth read data) meeting the first protocol, and transmit the group of second data to the first memory controlling module 22. The first memory controlling module 22 may convert 8 groups of second data transmitted by the memory physical layer interface 23 into 256-bit third data, and transmit the third data to the second bit width converting module 26. The second bit width converting module 26 may convert the third data into 128-bit fourth data and fifth data according to the second preset converting mode, where the fourth data come from the first memory module, the fifth data come from the second memory module.

In an optional embodiment, the error signal according to embodiments of this disclosure may be output to an error processing module in the intelligent driving chip, and also may be output to the processor, to accordingly process in time an error that occurs, such as to reset the IC, or to send alarm information to a user, etc., specifics of which may be set as needed, and are not limited in embodiments of this disclosure.

With this embodiment, in data reading the fourth data and the fifth data, coming respectively from the two memory modules, obtained by the second bit width converting module are compared, and an error signal is output when the result of comparison indicates inconsistency, which enables to accordingly process in time an error that occurs, which thereby helps improve data reading safety, such that a read access to the memory is enabled to meet a high safety level.

FIG. 4 is a diagram of a structure of a read data verification module 27 according to an illustrative embodiment of this disclosure.

In an optional embodiment, the read data verification module 27 may include: a preset number of XOR circuits 271 and an OR circuit 272.

Two inputs of an n-th XOR circuit of the preset number of XOR circuits 271 respectively may be a value of an n-th bit of the fourth data and a value of an n-th bit of the fifth data, and the XOR circuits 271 respectively may be configured for, in response to two different input values, outputting 1, and in response to two identical input values, outputting 0, where the preset number may be same as a bit width of the fourth data.

An input of the OR circuit 272 may be connected respectively to outputs of the XOR circuits 271, where the OR circuit 272 may be configured for outputting the error signal in response to that any one XOR circuit of the XOR circuits 271 outputs 1.

The preset number may be set according to the bit width of the fourth data. For example, the bit width of the fourth data may be 128-bit. Then, 128 XOR circuits 271 may be set, specifics of which are not limited.

In an optional embodiment, a specific structure of the OR circuit 272 may be set as needed. For example, a number of inputs of the OR circuit 272 may be set according to the number of the XOR circuits 271, and an internal structure of the OR circuit 272 may be implemented using a plurality of or logic devices.

With this embodiment, the fourth data and the fifth data are enabled to be compared bit by bit using a preset number of XOR circuits and a OR circuit, and an error signal is enabled to be output through one output in case a result of comparison indicates inconsistency on any one bit, which enables to effectively reduce connecting wires with other modules.

In an optional embodiment, the preset number also may be same as a bit width of the first read data. Then, the fourth data and the fifth data may be compared group by group. For example, the bit width of the first read data is 16-bit. Then, the read data verification module 27 may include 16 XOR circuits 271 and an OR circuit 272, and 16 bits of the fourth data and 16 bits of the fifth data corresponding to the 16 bits of the fourth data are verified as inputs of the read data verification module 27.

In an optional embodiment, the read data verification module 27 further may be implemented using serial registers and an XOR circuit or comparator. For example, the fourth data and the fifth data are stored respectively using two serial registers, two inputs of the XOR circuit or comparator are connected respectively to the two serial registers, and bits are input to the XOR circuit or comparator in series by controlling the two serial registers, which enables to input the n-th bit of the fourth data and the n-th bit of the fifth data to the XOR circuit for comparison, and to output the error signal when the two are inconsistent.

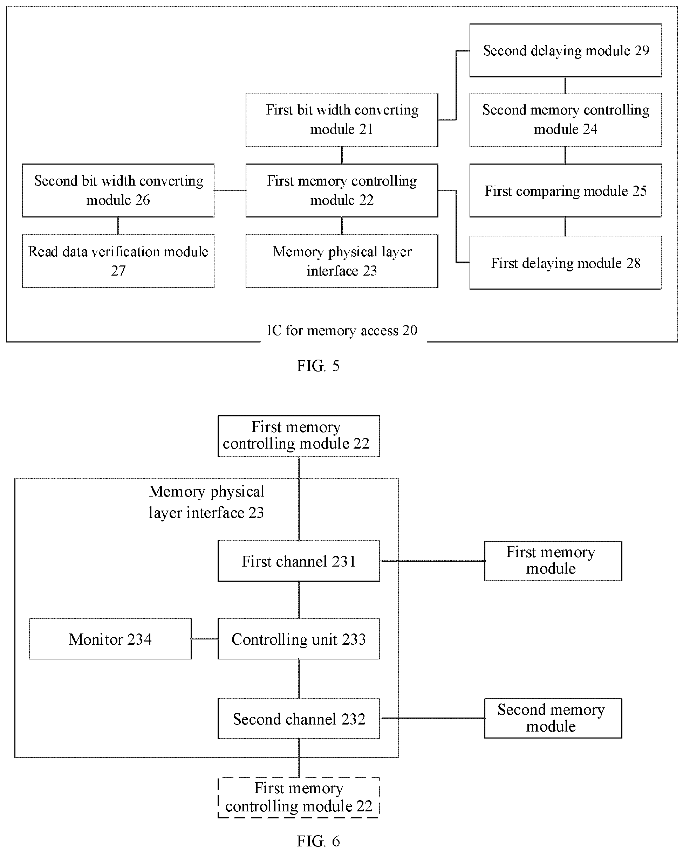

FIG. 5 is a diagram of a structure of an integrated circuit (IC) for memory access according to yet another illustrative embodiment of this disclosure.

In an optional embodiment, the IC according to embodiments of this disclosure further may include: a first delaying module 28 and a second delaying module 29.

The first delaying module 28 may be connected respectively to the first memory controlling module 22 and the first comparing module 25, and the first delaying module 28 may be configured for: delaying the at least one group of third write access signals output by the first memory controlling module 22 by a first amount of time, and then transmitting the delayed at least one group of third write access signals to the first comparing module 25.

The second delaying module 29 may be connected respectively to the first bit width converting module 21 and the second memory controlling module 24, and the second delaying module 29 may be configured for: delaying the second write access signal output by the first bit width converting module 21 by the first amount of time, and then transmitting the delayed second write access signal to the second memory controlling module 24.

Specific structures of the first delaying module 28 and the second delaying module 29 may be set as needed, to enable signal delay, specifics of which are not limited. For example, time when a received signal is to be sent may be controlled using a timer. The first amount of time may be set as needed, such as to be 1 clock period, 2 clock periods, etc., specifics of which are not limited. For the first memory controlling module 22, after the first memory controlling module 22 has done processing, time elapsed before an output result reaches the first comparing module 25 may be delayed using the first delaying module 28. For the second memory controlling module 24, before the second memory controlling module 24 starts processing, time elapsed before the second write access signal reaches the second memory controlling module 24 may be delayed, and then time elapsed before a processing result of the second memory controlling module 24 reaches the first comparing module 25 is implemented, which enables the processing results of the two memory controlling modules to simultaneously reach the first comparing module 25, and enables the first memory controlling module 22 and the second memory controlling module 24 to convert one second write access signal at different moments, avoiding a failure to detect an error which tends to happen when that same error occurs to the two memory controlling modules as the two modules operate simultaneously. For example, in processing, the same error occurs to the two memory controlling modules, such as when the two modules simultaneously suffer interference from some factors (such as electromagnetic interference), such that obtained erroneous at least one group of third write access signals and obtained erroneous at least one group of fifth write access signals are still consistent with each other. Consequently, the error cannot be detected by comparison using the first comparing module 25.

Note that in addition to delaying the at least one group of third write access signals output by the first memory controlling module 22 by the first amount of time, and then transmitting the delayed at least one group of third write access signals to the first comparing module 25, the first delaying module 28 further may delay any other signal output by the first memory controlling module 22 by the first amount of time, and then transmit the delayed any other signal to the first comparing module 25. Accordingly, in addition to delaying the second write access signal output by the first bit width converting module 21 by the first amount of time, and then transmitting the delayed second write access signal to the second memory controlling module 24, the second delaying module 29 further may delay any other signal to be input to the second memory controlling module 24 by the first amount of time, specifics of which may be set as needed.

With this embodiment, signal delay is performed at different stages for the first memory controlling module 22 and the second memory controlling module 24, which enables to effectively avoid a failure to detect an error which tends to happen when the error occurs simultaneously to the two memory controlling modules, further improving memory access safety.

FIG. 6 is a diagram of a structure of a memory physical layer interface 23 according to an illustrative embodiment of this disclosure.

In an optional embodiment, the memory physical layer interface 23 may include: a first channel 231, a second channel 232, a controlling unit 233, and a monitor 234.

The first channel 231 may be configured for transmitting one fourth write access signal corresponding to a group of third write access signals of the at least one group of third write access signals to a first memory module corresponding to the first channel 231.

The second channel 232 may be configured for transmitting the other fourth write access signal corresponding to the group of third write access signals to a second memory module corresponding to the second channel 232.

The controlling unit 233 may be connected respectively to the first channel 231 and the second channel 232, and the controlling unit 233 may be configured for producing an operation clock and a reset signal for the first channel 231 and the second channel 232.

The monitor 234 may be connected to the controlling unit 233, and the monitor 234 may be configured for: monitoring the operation clock and/or the reset signal, and outputting an alarm signal based on a monitoring result.

The first channel 231 and the second channel 232 may respectively be connected to the first memory controlling module 22, the first channel 231 further may be connected to the first memory module, and the second channel 232 further may be connected to the second memory module. The first channel 231 may convert one third write access signal in a group of third write access signals into one fourth write access signal meeting the memory protocol, and transmit the one fourth write access signal to the first memory module. Likewise, the second channel 232 may convert the other third write access signal in the group of third write access signals into another fourth write access signal meeting the memory protocol, and transmit the other fourth write access signal to the second memory module. The operation clock may be configured for driving the first channel 231 and the second channel 232 to start to operate. The reset signal may be configured for controlling the first channel 231 and the second channel 232 to reset the memory and the memory physical layer interface 23. The controlling unit 233 may be controlled by another module of the intelligent driving chip, such as the processor, a reset managing module etc., specifics of which may be set as needed. For example, when a malfunction occurs, to reset the IC according to embodiments of this disclosure to process the malfunction in response to an interrupt, the processor may send a reset instruction to the reset managing module, or directly to the controlling unit 233. The controlling unit 233 may control the first channel 231 and the second channel 232 to reset the memory, where specifics of the operation clock and reset control may be set as needed, and are not limited in embodiments of this disclosure. The monitor 234 may monitor the operation clock and/or the reset signal from the controlling unit 233 in real time or regularly, and may output an alarm signal when it is monitored that an error occurs to, or a preset condition is not met by, the operation clock and/or the reset signal, to discover a problem in time, thereby improving functional safety of the memory physical layer interface 23. The monitor 234 for example may check whether a count of generated operation clocks is within an expected range, and may output the alarm signal if the count is not within the expected range; or as another example, may monitor whether an error occurs to the reset signal, and may output the alarm signal if the reset signal is triggered (where for example pull-down indicates trigger of a reset operation) during normal operation of the memory.

With the memory physical layer interface according to this embodiment, conversion and transmission of two third write access signals of the same group is implemented using two independent channels, to store data parts coming respectively from the two copies of the original to-be-written data in two memory modules, which enables to store two identical copies of the original to-be-written data respectively in the two memory modules, facilitating verification in data reading, such that memory access is enabled to meet a high safety level.

In an optional embodiment, the first channel 231 further may be configured for converting the first read data read from the first memory module into the third read data meeting the first protocol, and transmitting the third read data to the first memory controlling module 22; and the second channel 232 further may be configured for converting the second read data read from the second memory module into the fourth read data meeting the first protocol, and transmitting the fourth read data to the first memory controlling module 22. The first memory controlling module 22 further may be configured for converting at least one of third read data transmitted by the first channel 231 and at least one of fourth read data transmitted by the second channel 232 into the third data meeting the second protocol supported by the second bit width converting module 26, and transmitting the third data to the second bit width converting module 26. The second bit width converting module 26 then may perform bit width conversion on the third data according to the second preset converting mode, to obtain the fourth data and the fifth data, transmit the fourth data to the processor, and transmit the fourth data and the fifth data to the read data verification module 27. The read data verification module 27 may be configured for comparing the fourth data and the fifth data, and in response to the result of comparison being inconsistent, outputting the error signal.

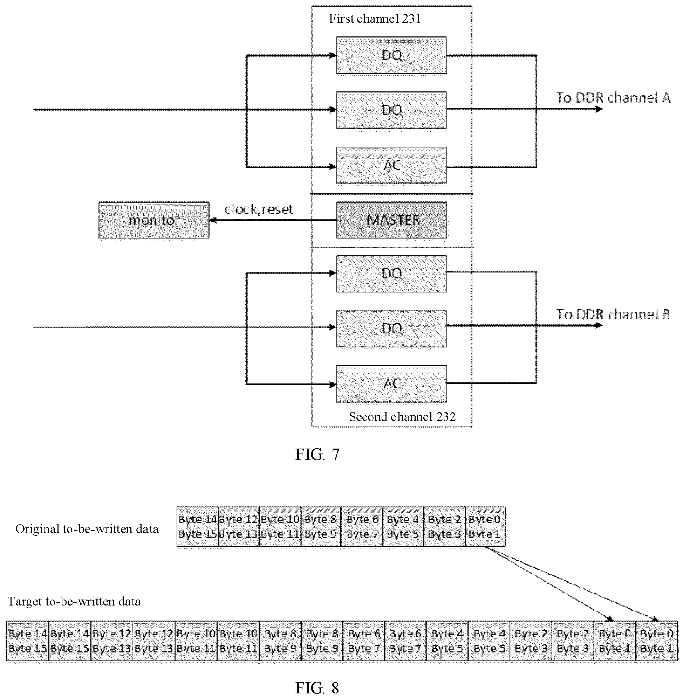

In an optional example, FIG. 7 is a diagram of a structure of a memory physical layer interface 23 according to another illustrative embodiment of this disclosure. In the figure, monitor indicates the monitor 234, clock indicates the operation clock, reset indicates the reset signal, MASTER indicates the controlling unit 233, and a DDR channel A and a DDR channel B indicate two channels of a dual channel memory (such as a dual channel SDRAM). The first channel 231 and the second channel 232 have consistent structures, and both include three channels DQ, DQ, and AC, where the DQs indicate data channels, configured for transmitting data, and the AC indicates an address/command channel, configured for transmitting an address as well as a command.

In an optional embodiment, the first bit width converting module 21 specifically may be configured for:
with a first bit width as granularity, producing, for a respective part of original data of the first bit width of the original to-be-written data included in the first write access signal, two identical copies of the respective part of original data, and setting the two identical copies to be two consecutive target data of the first bit width, where the first bit width is same as a data bit width supported by the first protocol; determining the target to-be-written data by using target data corresponding respectively to at least one part of original data according to a sequence of the at least one part of original data in the original to-be-written data; converting a signal indicating a length of the original to-be-written data included in a control signal in the first write access signal into a signal indicating a length of the target to-be-written data, to obtain a target control signal; and determining the second write access signal based on the target to-be-written data and the target control signal.

In an optional example, FIG. 8 is a schematic diagram of a principle of converting original to-be-written data into target to-be-written data according to an illustrative embodiment of this disclosure. In the figure, Byte indicates byte, 1Byte=8bit, where bit indicates bit. For example, Byte0 includes 8 bits, i.e., bit0 to bit7. As shown in FIG. 8, the first bit width is 16-bit. Of the original to-be-written data included in the first write access signal considered at granularity of 16 bits, two identical copies of a respective part of original data of the first bit width (such as Byte0 and Byte1) are produced, and the two identical copies are set to be two consecutive target data of the first bit width; and then target data (a total of 8 target data) corresponding respectively to at least one part of original data (a total of 8 parts of original data) are combined according to the sequence of the at least one part of original data in the original to-be-written data, to obtain the target to-be-written data.

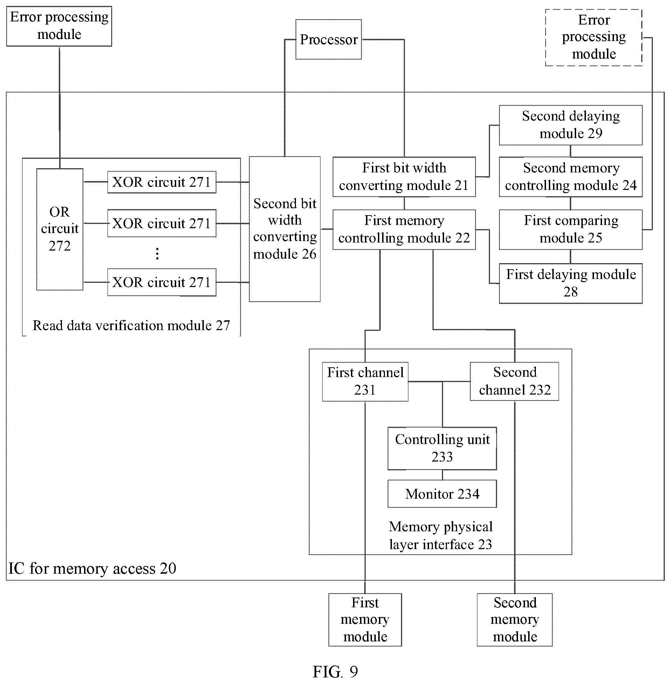

In an optional example, FIG. 9 is a diagram of a structure of an integrated circuit (IC) for memory access according to still another illustrative embodiment of this disclosure. Refer to a foregoing content for a specific principle of how parts of the circuit operate, which is not elaborated here.

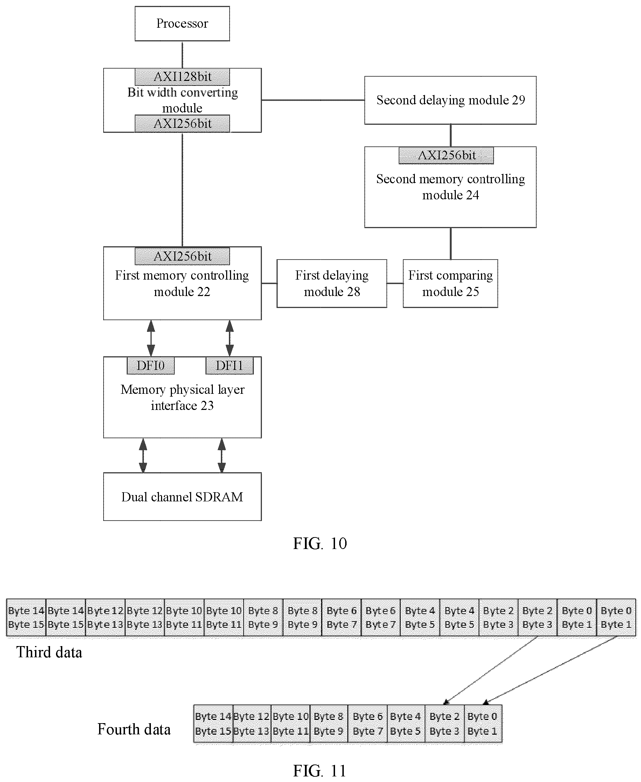

In an optional embodiment, as the converting function of the first bit width converting module 21 and the converting function of the second bit width converting module 26 belong to inverse conversions, in actual application, the functions may be implemented using one bit width converting module. Illustratively, FIG. 10 is a diagram of a structure of an integrated circuit (IC) for memory access according to yet another illustrative embodiment of this disclosure. As shown in FIG. 10, taking a bit width of the original to-be-written data being 128-bit as an example, the bit width converting module enables to implement the functions of the foregoing first bit width converting module 21 and the second bit width converting module 26. In data writing, by conversion according to an advanced extensible interface (AXI) protocol, the bit width converting module converts the first write access signal of the 128-bit original to-be-written data into target to-be-written data, with the bit width becoming 256-bit and including two copies of the original to-be-written data. In data reading, by conversion according to the AXI protocol, the bit width converting module converts 256-bit third data transmitted by the first memory controlling module 22 into 128-bit fourth data and fifth data, and transmits one of the fourth data and fifth data to the processor. In this case, the read data verification module 27 also may be set in the bit width converting module, for verifying the fourth data and the fifth data obtained by conversion. The AXI protocol is a bus protocol, with phase-separate address /control (also referred to as command) and data, which supports unaligned data transfer, with a specific principle thereof not elaborated.

In an optional example, FIG. 11 is a schematic diagram of a principle of converting third data into fourth data according to an illustrative embodiment of this disclosure. As shown in FIG. 11, taking a bit width of the third data being 256-bit as an example. The 256-bit third data are converted into 128-bit data. Of the third data, bytes other than bytes constituting the fourth data constitute the fifth data. The fifth data are consistent with the fourth data in principle, which is not elaborated here.

Any one module and or any one unit in this example may be implemented using hardware or software, and to guarantee real-time performance, may be implemented using a hardware logic circuit.

In an optional example, to guarantee apparatus real-time performance, modules in the apparatus according to embodiments of this disclosure as described above, units in the modules, and sub-units in the units respectively may be implemented using a hardware logic circuit, thereby effectively lowering a hardware overhead and a power consumption overhead, and guaranteeing real-time performance.

Respective embodiments as well as optional examples of this disclosure may be implemented separately, or in any combination as long as it causes no conflict, specifics of which may be set as needed.

### Illustrative method

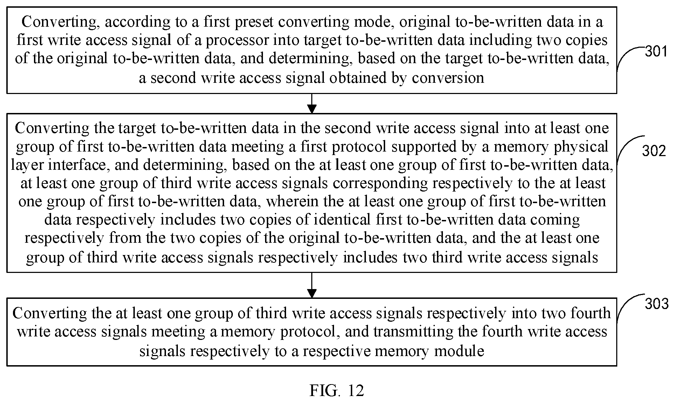

FIG. 12 is a flowchart of a processing method for memory access according to an illustrative embodiment of this disclosure. The method may be implemented using the IC for memory access according to any one embodiment described above. As shown in FIG. 12, a method according to embodiments of this disclosure may include steps as follows.

Step 301, Converting, according to a first preset converting mode, original to-be-written data in a first write access signal of a processor into target to-be-written data including two copies of the original to-be-written data, and determining, based on the target to-be-written data, a second write access signal obtained by conversion

In an optional example, step 301 may be implemented by a processor by invoking respective instructions stored in a memory, or implemented by the first bit width converting module as described above.

Step 302, Converting the target to-be-written data in the second write access signal into at least one group of first to-be-written data meeting a first protocol supported by a memory physical layer interface, and determining, based on the at least one group of first to-be-written data, at least one group of third write access signals corresponding respectively to the at least one group of first to-be-written data, wherein the at least one group of first to-be-written data respectively includes two copies of identical first to-be-written data coming respectively from the two copies of the original to-be-written data, and the at least one group of third write access signals respectively includes two third write access signals.

In an optional example, step 302 may be implemented by a processor by invoking respective instructions stored in a memory, or implemented by the first memory controlling module as described above.

Step 303, Converting the at least one group of third write access signals respectively into two fourth write access signals meeting a memory protocol, and transmitting the fourth write access signals respectively to a respective memory module.

In an optional example, step 303 may be implemented by a processor by invoking respective instructions stored in a memory, or implemented by the memory physical layer interface as described above.

Specific operations of steps of the method according to embodiments of this disclosure are elaborated in a foregoing IC embodiment, and are not repeated here.

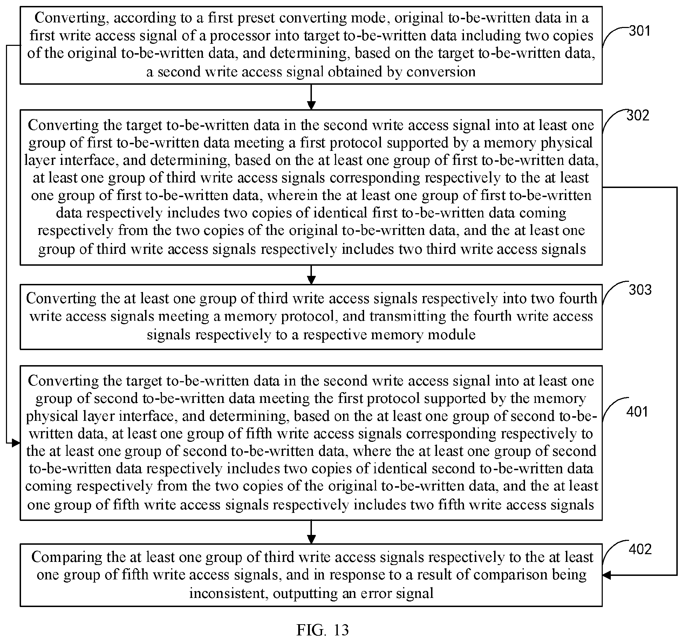

FIG. 13 is a flowchart of a processing method for memory access according to another illustrative embodiment of this disclosure.

In an optional embodiment, the method according to embodiments of this disclosure further may include steps as follows.

Step 401, Converting the target to-be-written data in the second write access signal into at least one group of second to-be-written data meeting the first protocol supported by the memory physical layer interface, and determining, based on the at least one group of second to-be-written data, at least one group of fifth write access signals corresponding respectively to the at least one group of second to-be-written data, where the at least one group of second to-be-written data respectively includes two copies of identical second to-be-written data coming respectively from the two copies of the original to-be-written data, and the at least one group of fifth write access signals respectively includes two fifth write access signals.

In an optional example, step 401 may be implemented by a processor by invoking respective instructions stored in a memory, or implemented by the second memory controlling module as described above.

Step 402, Comparing the at least one group of third write access signals respectively to the at least one group of fifth write access signals, and in response to a result of comparison being inconsistent, outputting an error signal.

In an optional example, step 402 may be implemented by a processor by invoking respective instructions stored in a memory, or implemented by the first comparing module as described above.

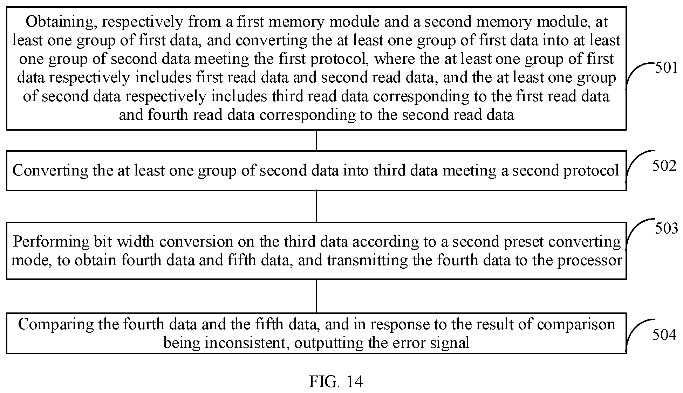

FIG. 14 is a flowchart of reading data in memory access according to an illustrative embodiment of this disclosure.

In an optional embodiment, the method according to embodiments of this disclosure further may include steps as follows.

Step 501, Obtaining, respectively from a first memory module and a second memory module, at least one group of first data, converting the at least one group of first data into at least one group of second data meeting the first protocol, where the at least one group of first data respectively includes first read data and second read data, and the at least one group of second data respectively includes third read data corresponding to the first read data and fourth read data corresponding to the second read data.

In an optional example, step 501 may be implemented by a processor by invoking respective instructions stored in a memory, or implemented by the memory physical layer interface as described above.

Step 502, Converting the at least one group of second data into third data meeting a second protocol.

In an optional example, step 502 may be implemented by a processor by invoking respective instructions stored in a memory, or implemented by the first memory controlling module as described above.

Step 503, Performing bit width conversion on the third data according to a second preset converting mode, to obtain fourth data and fifth data, and transmitting the fourth data to the processor.

In an optional example, step 503 may be implemented by a processor by invoking respective instructions stored in a memory, or implemented by the second bit width converting module as described above.

Step 504, Comparing the fourth data and the fifth data, and in response to the result of comparison being inconsistent, outputting the error signal.

In an optional example, step 504 may be implemented by a processor by invoking respective instructions stored in a memory, or implemented by the read data verification module as described above.

In an optional embodiment, in step 504, the comparing the fourth data and the fifth data, and in response to the result of comparison being inconsistent, outputting the error signal may include: comparing the value of the n-th bit of the fourth data and the value of the n-th bit of the fifth data, and outputting the error signal when a result of comparison for any one bit indicates a difference.

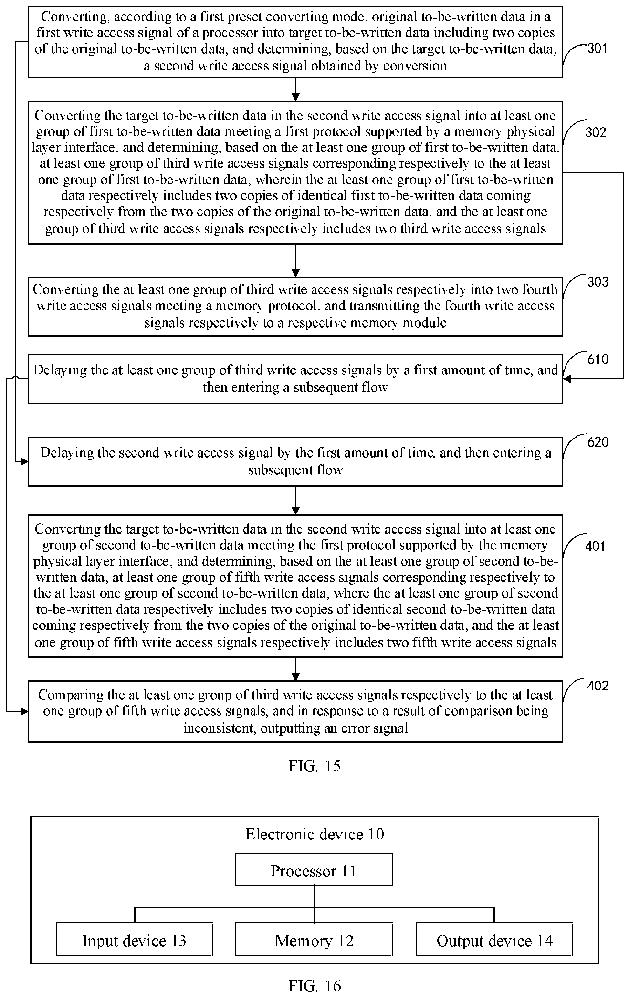

FIG. 15 is a flowchart of a processing method for memory access according to yet another illustrative embodiment of this disclosure.

In an optional embodiment, the method according to embodiments of this disclosure further may include steps as follows.

Step 610, Delaying the at least one group of third write access signals by a first amount of time, and then entering a subsequent flow.

In an optional example, step 610 may be implemented by a processor by invoking respective instructions stored in a memory, or implemented by the first delaying module as described above.

Step 620, Delaying the second write access signal by the first amount of time, and then entering a subsequent flow.

In an optional example, step 620 may be implemented by a processor by invoking respective instructions stored in a memory, or implemented by the second delaying module as described above.

In an optional embodiment, in step 303, the converting the at least one group of third write access signals respectively into two fourth write access signals meeting a memory protocol, and transmitting the fourth write access signals respectively to a respective memory module may include:

transmitting one fourth write access signal corresponding to a group of third write access signals of the at least one group of third write access signals to a first memory module, and transmitting the other fourth write access signal corresponding to the group of third write access signals to a second memory module.

In an optional embodiment, in step 303, the converting the at least one group of third write access signals respectively into two fourth write access signals meeting a memory protocol, and transmitting the fourth write access signals respectively to a respective memory module may include:

producing an operation clock, for triggering the transmitting one fourth write access signal corresponding to a group of third write access signals of the at least one group of third write access signals to a first memory module, and the transmitting the other fourth write access signal corresponding to the group of third write access signals to a second memory module.

In an optional embodiment, in step 303, the converting the at least one group of third write access signals respectively into two fourth write access signals meeting a memory protocol, and transmitting the fourth write access signals respectively to a respective memory module further may include:

to reset the first memory module and/or the second memory module, producing a reset signal and transmitting the reset signal to the first memory module and/or the second memory module.

In an optional embodiment, in step 303, the converting the at least one group of third write access signals respectively into two fourth write access signals meeting a memory protocol, and transmitting the fourth write access signals respectively to a respective memory module further may include:

monitoring the operation clock and/or the reset signal, and outputting an alarm signal based on a monitoring result.

In an optional embodiment, step 301 may include:
with a first bit width as granularity, producing, for a respective part of original data of the first bit width of the original to-be-written data included in the first write access signal, two identical copies of the respective part of original data, and setting the two identical copies to be two consecutive target data of the first bit width, where the first bit width is same as a data bit width supported by the first protocol; determining the target to-be-written data by using target data corresponding respectively to at least one part of original data according to a sequence of the at least one part of original data in the original to-be-written data; converting a signal indicating a length of the original to-be-written data included in a control signal in the first write access signal into a signal indicating a length of the target to-be-written data, to obtain a target control signal; and determining the second write access signal based on the target to-be-written data and the target control signal.

For beneficial technical effects corresponding to the illustrative embodiments of this method, one may refer to the respective beneficial technical effects in the "Illustrative apparatus" section described above, which are not repeated here.

Any one processing method for memory access according to embodiments of this disclosure may be implemented by any appropriate device capable of data processing, including but not limited to a terminal device, a server, etc. Alternatively, the any one processing method for memory access according to embodiments of this disclosure may be implemented by a processor. For example, the processor implements the any one processing method for memory access mentioned in embodiments of this disclosure by calling respective instructions stored in a memory, or, the any one method according to embodiments of this disclosure may be implemented by a hardware logic circuit apparatus, which is not elaborated hereinafter.

A person of ordinary skill in the art may understand that: all or some of the steps implementing a method embodiment as described above may be completed by instructing related hardware using a program; the foregoing program may be stored in a computer readable storage medium, and when executed, executes steps including the method embodiment as described above; and the foregoing storage medium includes various media capable of storing a program code, such as a read-only memory (ROM), a random access memory (RAM), a disk or a compact disk read-only memory (CD-ROM), etc.

### Illustrative electronic device

Embodiments of this disclosure further provide an electronic device, including: a memory, configured for storing a computer program; and
a processor, configured for executing the computer program stored in the memory, where when executed, the computer program implements a method according to any one embodiment of this disclosure as described herein.

Or, the electronic device includes the apparatus (i.e., the IC for memory access) according to any one embodiment as described herein, to implement the method according to any one embodiment of this disclosure as described herein.

At least one module in the apparatus is implemented using a hardware logic circuit; or at least one unit in the at least one module is implemented using a hardware logic circuit.

To improve real-time performance, a respective module in the apparatus, a respective unit in the respective module, and a respective sub-unit in the respective unit respectively are implemented using a hardware logic circuit, that is, the whole apparatus is a hardware logic circuit.

FIG. 16 is a schematic diagram of a structure of an application embodiment of an electronic device according to this disclosure. In this embodiment, the electronic device 10 includes one or more processors 11 and a memory 12.

The processor 11 may be a central processing unit (CPU) or another form of processing unit having a data processing capability and/or an instruction execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 11 may execute the program instructions to implement the method according to the various embodiments of this disclosure that are described above and/or other desired functions. Various contents such as an input signal, a signal component, a noise component, etc., further may be stored in the computer readable storage media.

In an example, the electronic device 10 may further include an input device 13 and an output device 14. These components are connected to each other through a bus system and/or another form of connection mechanism (not shown).

In addition, the input device 13 may further include, for example, a keyboard and a mouse.

The output device 14 may output various information to the outside, and the output device 14 may include, for example, a display, a speaker, a printer, a communication network, and a remote output device connected to the communication network.

Certainly, for simplicity, FIG. 16 shows only some of components in the electronic device 10 that are related to this disclosure, and components such as a bus and an input/output interface are omitted. In addition, according to specific application situations, the electronic device 10 may further include any other appropriate components.

In an optional embodiment, an electronic device further may be provided. The electronic device includes the IC for memory access according to any one embodiment or example as described herein, and further may include another related apparatus, which is not elaborated here. At least one module in the IC is implemented using a hardware logic circuit; or at least one unit in the at least one module is implemented using a hardware logic circuit.

### Illustrative computer program product and computer readable storage medium

In addition to the foregoing method and device, embodiments of this disclosure may also be a computer program product, which includes computer program instructions. When the instructions are run by a processor, the processor is enabled to perform the steps, of the method according to the embodiments of this disclosure, that are described in the "Illustrative method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Illustrative method" section of this specification.

The storage medium of this disclosure further may store data to be stored for at least one hardware logic circuit of an apparatus for protecting an image data processing module provided in the "Illustrative apparatus" section in the specification of this disclosure, which enables the at least one hardware logic circuit to implement a corresponding function in operation. For example, the storage medium is a register for the hardware logic circuit, and stores data configured by initialization, or stores data needing to be stored in operation, specifics of which are not limited. The at least one hardware logic circuit may be the hardware logic circuit of a module in the apparatus, the hardware logic circuit of a unit in the module, or the hardware logic circuit of a sub-unit in the unit, specifics of which are not limited.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. An integrated circuit for memory access, comprising:
a first bit width converting module, configured for: converting, according to a first preset converting mode, original to-be-written data in a first write access signal of a processor into target to-be-written data comprising two copies of the original to-be-written data, and determining, based on the target to-be-written data, a second write access signal obtained by conversion;
a first memory controlling module, connected to the first bit width converting module, and configured for: converting the target to-be-written data in the second write access signal into at least one group of first to-be-written data meeting a first protocol supported by a memory physical layer interface, and determining, based on the at least one group of first to-be-written data, at least one group of third write access signals corresponding respectively to the at least one group of first to-be-written data, wherein the at least one group of first to-be-written data respectively comprises two copies of identical first to-be-written data coming respectively from the two copies of the original to-be-written data, and the at least one group of third write access signals respectively comprises two third write access signals; and
the memory physical layer interface, connected to the first memory controlling module, and configured for: converting the at least one group of third write access signals respectively into two fourth write access signals meeting a memory protocol, and transmitting the fourth write access signals respectively to a respective memory module.

2. The integrated circuit according to claim 1, further comprising:
a second memory controlling module, connected to the first bit width converting module, and configured for: converting the target to-be-written data in the second write access signal into at least one group of second to-be-written data meeting the first protocol supported by the memory physical layer interface, and determining, based on the at least one group of second to-be-written data, at least one group of fifth write access signals corresponding respectively to the at least one group of second to-be-written data, wherein the at least one group of second to-be-written data respectively comprises two copies of identical second to-be-written data coming respectively from the two copies of the original to-be-written data, and the at least one group of fifth write access signals respectively comprises two fifth write access signals; and
a first comparing module, connected respectively to the first memory controlling module and the second memory controlling module, and configured for: comparing the at least one group of third write access signals respectively to the at least one group of fifth write access signals, and in response to a result of comparison being inconsistent, outputting an error signal.

3. The integrated circuit according to claim 2, further comprising: a second bit width converting module and a read data verification module, wherein
the memory physical layer interface is further configured for: obtaining, respectively from a first memory module and a second memory module, at least one group of first data, converting the at least one group of first data into at least one group of second data meeting the first protocol, and transmitting the at least one group of second data to the first memory controlling module, wherein the at least one group of first data respectively comprises first read data and second read data, and the at least one group of second data respectively comprises third read data corresponding to the first read data and fourth read data corresponding to the second read data;
the first memory controlling module is further configured for: converting the at least one group of second data into third data meeting a second protocol supported by the second bit width converting module, and transmitting the third data to the second bit width converting module;
the second bit width converting module is configured for: performing bit width conversion on the third data according to a second preset converting mode, to obtain fourth data and fifth data, and transmitting the fourth data to the processor; and
the read data verification module is configured for: comparing the fourth data and the fifth data, and in response to the result of comparison being inconsistent, outputting the error signal.

4. The integrated circuit according to claim 3, wherein the read data verification module comprises:
a preset number of XOR circuits, wherein two inputs of an n-th XOR circuit of the XOR circuits respectively are a value of an n-th bit of the fourth data and a value of an n-th bit of the fifth data, and the XOR circuits respectively are configured for, in response to two different input values, outputting 1, and in response to two identical input values, outputting 0, wherein the preset number is same as a bit width of the fourth data; and
an OR circuit, with an input connected respectively to outputs of the XOR circuits, wherein the OR circuit is configured for outputting the error signal in response to that any one XOR circuit of the XOR circuits outputs 1.

5. The integrated circuit according to claim 2, further comprising:
a first delaying module, connected respectively to the first memory controlling module and the first comparing module, and configured for: delaying the at least one group of third write access signals output by the first memory controlling module by a first amount of time, and then transmitting the delayed at least one group of third write access signals to the first comparing module; and
a second delaying module, connected respectively to the first bit width converting module and the second memory controlling module, and configured for: delaying the second write access signal output by the first bit width converting module by the first amount of time, and then transmitting the delayed second write access signal to the second memory controlling module.

6. The integrated circuit according to claim 1, wherein the memory physical layer interface comprises:
a first channel, configured for transmitting one fourth write access signal corresponding to a group of third write access signals of the at least one group of third write access signals to a first memory module corresponding to the first channel;
a second channel, configured for transmitting the other fourth write access signal corresponding to the group of third write access signals to a second memory module corresponding to the second channel;
a controlling unit, connected respectively to the first channel and the second channel, and configured for producing an operation clock and a reset signal for the first channel and the second channel; and
a monitor, connected to the controlling unit, and configured for: monitoring the operation clock and/or the reset signal, and outputting an alarm signal based on a monitoring result.

7. The integrated circuit according to claim 1, wherein the first bit width converting module is specifically configured for:
with a first bit width as granularity, producing, for a respective part of original data of the first bit width of the original to-be-written data comprised in the first write access signal, two identical copies of the respective part of original data, and setting the two identical copies to be two consecutive target data of the first bit width, wherein the first bit width is same as a data bit width supported by the first protocol;
determining the target to-be-written data by using target data corresponding respectively to at least one part of original data according to a sequence of the at least one part of original data in the original to-be-written data;
converting a signal indicating a length of the original to-be-written data comprised in a control signal in the first write access signal into a signal indicating a length of the target to-be-written data, to obtain a target control signal; and
determining the second write access signal based on the target to-be-written data and the target control signal.

8. A processing method for memory access, comprising:
converting, according to a first preset converting mode, original to-be-written data in a first write access signal of a processor into target to-be-written data comprising two copies of the original to-be-written data, and determining, based on the target to-be-written data, a second write access signal obtained by conversion;
converting the target to-be-written data in the second write access signal into at least one group of first to-be-written data meeting a first protocol supported by a memory physical layer interface, and determining, based on the at least one group of first to-be-written data, at least one group of third write access signals corresponding respectively to the at least one group of first to-be-written data, wherein the at least one group of first to-be-written data respectively comprises two copies of identical first to-be-written data coming respectively from the two copies of the original to-be-written data, and the at least one group of third write access signals respectively comprises two third write access signals; and
converting the at least one group of third write access signals respectively into two fourth write access signals meeting a memory protocol, and respectively transmitting the fourth write access signals to a respective memory module.

9. A computer readable storage medium, wherein the storage medium stores a computer program, when executed by a processor, cause the processor to implement the processing method according to claim 8; or
the storage medium is configured for storing data to be stored for at least one hardware logic circuit of the integrated circuit according to any one of claims 1-7, which enables the at least one hardware logic circuit to implement a corresponding function in operation.

10. An electronic device, wherein the electronic device comprises:
a processor; and
a memory, configured to store processor-executable instructions, wherein
the processor is configured to read the executable instructions from the memory, and execute the instructions to implement the processing method according to claim 8; or
the electronic device comprises the integrated circuit for memory access according to any one of claims 1-7,
wherein at least one module in the integrated circuit for memory access is implemented using a hardware logic circuit.
